# DEMANDE DE BREVET EUROPEEN

(11) **EP 0 595 678 A1**
(43) Date de publication de la demande: **04.05.1994**
(21) Numéro de dépôt: 93402509.9
(22) Date de dépôt: 11.10.1993
(51) Int. Cl.: E03C 1/122, F16L 55/11, F16L 55/115, F16L 47/00

(54) **Dispositif de branchement selectif pour tuyau de vidange sur une canalisation d'evacuation sanitaire**

(30) Priorité: 20.10.1992 FR 9212515
(71) Demandeur: S.A. RACCORDS ET PLASTIQUES NICOLL, 49309 Cholet Cédex (FR)
(72) Inventeur: Benesteau, Claude, F-49750 Chanzeaux (FR); Morillon, Jean, F-49300 Saint Leger Sous Cholet (FR); Blandin, Jean-Claude, F-49300 Cholet (FR)
(74) Mandataire: Armengaud Ainé, Alain

(57) **Abrégé**

Dispositif de branchement sélectif, pour au moins un tuyau de vidange de petit diamètre, sur une canalisation ou un raccord d'évacuation sanitaire et comprenant un tampon de réduction (1) en caoutchouc ou élastomère muni d'au moins une série d'orifices operculables (6,7,8) destinés à l'introduction de plusieurs diamètres différents de tuyaux par séries d'orifice, caractérisé en ce que le tampon de réduction (1) qui est logé dans l'orifice de branchement (3) de la canalisation ou du raccord d'évacuation sanitaire, comprend sur sa face avant (côté extérieur) et au niveau de chaque série d'orifices operculables (6-7-8), au moins un toilage particulier (6'-6'') (7'-7'') (8'-8'') délimitant au moins une rondelle munie de dispositif de préhension (10-10') faisant saillie vers l'extérieur dudit toilage (6'-6'',7'-7'',8'-8''), et susceptible d'être arrachée pour dégager l'orifice de branchement (3) sélectionné.

## Description

L'invention concerne un dispositif de branchement sélectif pour au moins un tuyau de vidange de petit diamètre, sur une canalisation ou un raccord d'évacuation sanitaire et notamment sur un conduit de descente des eaux ménagères.

Elle concerne également un tampon réducteur pour le branchement et l'obturation de ladite canalisation d'évacuation.

Pour la réalisation d'un branchement de tuyauteries de vidange de petit diamètre sur un conduit de descente des eaux ménagères, différentes méthodes sont utilisées et qui font appel soit à un garnissage de ciment ou de plâtre à l'intérieur de l'emboîture de la canalisation, soit à un bouchon à base de caoutchouc et/ou de plastique jouant le rôle de tampon de réduction de l'orifice de la canalisation.

Jusqu'à présent, la solution du tampon de réduction a été la plus utilisée, car elle procure généralement une bonne étanchéité par rapport au garnissage précédemment décrit qui vieillit mal et transmet par sa rigidité les vibrations mécaniques et sonores véhiculées par la canalisation.

Un exemple de cet état de la technique est décrit dans US-A-3 654 965 dans lequel on retrouve un tampon de réduction muni de plusieurs orifices operculables et pouvant être logé dans l'orifice de branchement d'une canalisation d'évacuation sanitaire. Cette solution connue présente notamment l'inconvénient selon lequel, pour dégager l'orifice de branchement sélectionné, les opercules doivent être découpés au cutter, ce qui entraîne des risques de détérioration du joint et une absence d'étanchéité ne pouvant être décelée qu'après branchement et mise en service.

Ces tampons, selon cette technique antérieure, présentent toutefois un double inconvénient :
- ils nécessitent tout d'abord, lors du branchement du ou des tuyau(x) de vidange, une découpe précise du bouchon souple formant opercule. Or, cette opération est pour le moins fastidieuse et parfois risquée pour l'étanchéité du joint comme mentionné précédemment.
- les lèvres d'étanchéité ménagées sur les tampons ont une côte qui ne permet bien souvent d'accueillir qu'un seul diamètre de tuyau, voire deux diamètres comme décrit dans FR-A- 2 668 577.

Il en résulte que pour réaliser des branchements simples ou multiples le poseur doit disposer de toutes une série de tampons différents selon qu'il souhaite brancher un ou plusieurs tuyaux de diamètres identiques ou différents.

Les multiples variantes requises par le marché imposent donc au fabricant de proposer une gamme importante de tampons à trous, ce qui occasionne des coûts importants pour ce dernier mais également des risques d'erreur pour le poseur.

Le but de la présente invention vise à réduire considérablement le nombre de pièces requises pour les branchements de tuyaux de vidange sur l'orifice d'une canalisation d'évacuation sanitaire, en proposant un tampon de réduction en caoutchouc ou élastomère muni d'au moins une série d'orifices operculables destinés à l'introduction de plusieurs diamètres différents de tuyaux sans que l'ouverture de l'opercule ne soit préjudiciable à la qualité de branchement tampon-tuyau, en particulier à son étanchéité, et sans que cette opération ne soit problèmatique pourl'installateur.

En conséquence, cette invention a pour objet un dispositif de branchement sélectif, pour au moins un tuyau de vidange de petit diamètre, sur une canalisation ou un raccord d'évacuation sanitaire et comprenant un tampon de réduction en caoutchouc ou élastomère muni d'au moins une série d'orifices operculables destinés à l'introduction de plusieurs diamètres différents de tuyaux par séries d'orifice, caractérisé en ce que le tampon de réduction qui est logé dans l'orifice de branchement de la canalisation ou du raccord d'évacuation sanitaire, comprend sur sa face avant (côté extérieur) et au niveau de chaque série d'orifices operculables , au moins un toilage particulier délimitant au moins une rondelle munie de dispositif de préhension faisant saillie vers l'extérieur dudit toilage, et susceptible d'être arrachée pour dégager l'orifice de branchement sélectionné.

Pour faciliter l'ouverture sélective de l'opercule, chaque toilage est délimité par un rainurage sur les faces arrières et/ou avant de l'opercule. Chaque dispositif de préhension est quant à lui dimensionné et positionné pour permettre l'extraction de l'opercule souhaité par rupture franche au niveau d'une rainure circonscrite à ce même opercule.

Grâce à cet agencement, il est donc possible, à l'aide d'une simple pince(non coupante) d'arracher la partie d'opercule indésirable et d'introduire dans l'orifice du tampon de réduction l'un des tuyaux de vidange qu'il est susceptible d'accueillir avec étanchéité.

Selon une autre caractéristique de l'invention, le tampon de réduction peut comprendre sur sa face avant (côté extérieur) et au niveau de chaque orifice operculable, deux toilages dotés chacun d'un dispositif de préhension faisant saillie vers l'extérieur desdits toilages. Dans ce cas, les toilages sont disposés dans des plans différents mais parallèles au plan horizontal représenté par la face avant du tampon.

Selon encore une autre caractéristique de l'invention, le toilage du plus grand opercule est compris dans un plan disposé au-dessus du plan horizontal du tampon de réduction, tandis que le toilage du plus petit opercule est compris dans un plan disposé en dessous du plan horizontal dudit tampon.

Selon encore une autre caractéristique de l'invention, le tampon de réduction comprend sur sa face arrière (côté intérieur) et en limite externe de chaque toilage, au moins une membrane d'étanchéité à configuration tronconique en forme de lèvres.

Ainsi grâce au branchement sélectif de chaque orifice et à l'étanchéité assurée par les lèvres d'étanchéité, il est possible de multiplier pour un seul tampon réducteur les possibilités de branchement tout en simplifiant sensiblement le travail du poseur.

Des exemples de réalisation de l'invention sont décrits ci-après en référence aux dessins ci-joints dans lesquels :

LA FIGURE 1 montre le dispositif en élévation coupe avant montage.

LA FIGURE 2 montre le dispositif en élévation coupe après montage dans le plus petit orifice operculé.

LA FIGURE 3 montre le dispositif en élévation coupe après montage dans le plus grand orifice operculé.

LA FIGURE 4 est une vue en plan de la figure 1.

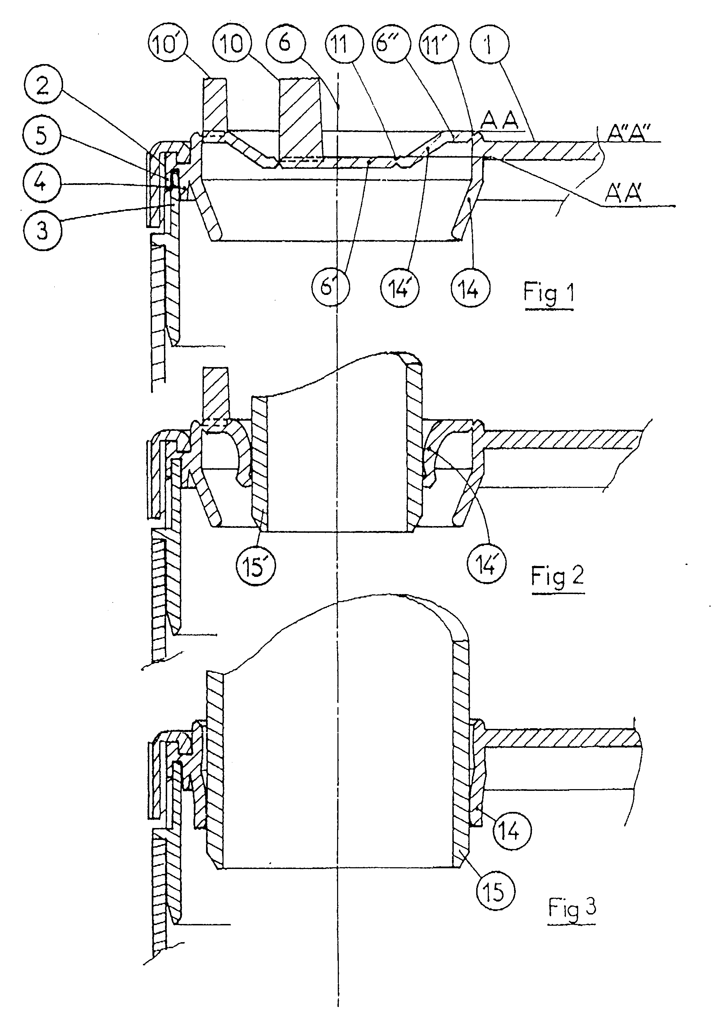

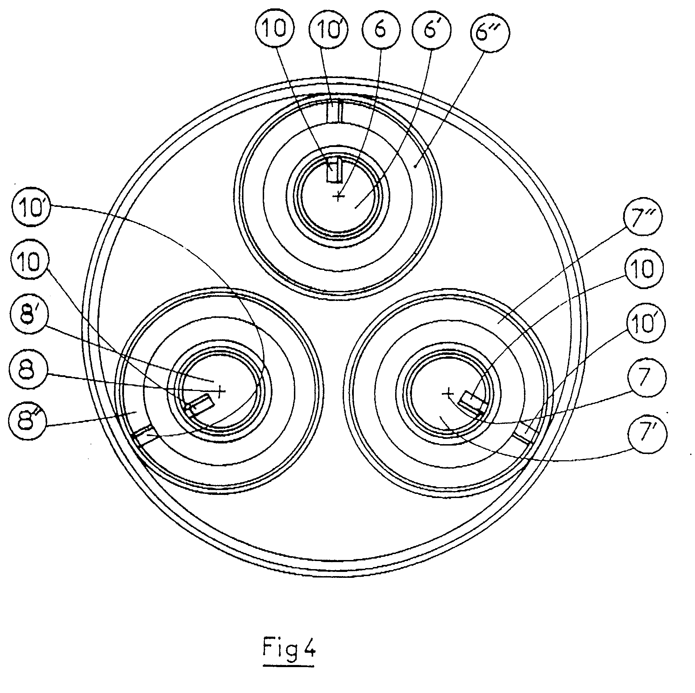

Comme on le voit sur les figures 1 ou 4, le dispositif de branchement sélectif pour tuyau de vidange d'une canalisation d'évacuation sanitaire se compose d'un tampon de réduction (1) en élastomère destiné à venir s'appuyer à l'aide d'une collerette circulaire (2) sur la surface extérieure de l'orifice de branchement (3) du raccord de canalisation, de façon que ledit raccord soit serré entre le joint latéral intérieur (4) et la jupe extérieure (5), l'ensemble étant maintenu en position étanche par une bague.

Le tampon de réduction (1) comprend sur sa face avant trois séries d'orifices operculables (6) (7) (8) permettant l'introduction de trois diamètres différents de tuyaux de vidange par série. On remarque sur la surface avant du tampon de réduction que chaque série d'orifices operculables (6) (7) (8) est dotée de deux toilages (6'-6'') (7'-7'') (8'-8'') délimitant des rondelles munies chacune d'un dispositif de préhension (10-10') faisant saillie de matière vers l'extérieur desdits toilages.

L'arrachement de l'un ou l'autre des toilages (6'-6'') (7'-7'') (8'-8'') se fait par l'intermédiaire d'une traction à l'arrachement exercée à l'aide d'une pince non coupante sur le dispositif de préhension (10-10') de son choix.

Afin de faciliter l'arrachement et d'éviter d'endommager accidentellement le joint, les toilages (6'-6'') (7'-7'') (8'-8'') sont obtenus par rétrécissement de matière de l'opercule (11-11') sur ses faces arrière et/ou avant.

On remarque également que les toilages (6'-6'') (7'-7'') (8'-8'') du tampon de réduction (1) sont disposés dans des plans différents A - A et A' - A' mais parallèles au plan horizontal A'' - A'' de la face avant du tampon.

On remarque enfin que les toilages (6''-7''-8'') des plus grands opercules sont compris dans un plan A - A disposé au dessus du plan horizontal A'' - A'' du tampon, tandis que les toilages (6' - 7' - 8') des plus petits opercules sont compris dans un plan A ' - A ' disposé en dessous du plan horizontal A'' - A'' dudit tampon. Entre ces deux plans A - A et A' - A', une membrane (14') en forme de lèvre tronconique assure, après l'opération d'arrachage du toilage (6'), l'étanchéité avec le tuyau de vidange (15') et comme représenté sur la figure 2.

Comme représenté sur les figures 2 ou 3, le tampon de réduction comprend sur sa face arrière et en limite externe de chaque toilage au moins une membrane d'étanchéité à configuration tronconique en forme de lèvres. La première membrane (14') et qui correspond au petit opercule a été décrite ci-dessus. La deuxième (14) s'étend sous la plan horizontal A'' - A'' du tampon et au delà du plan A' - A' du toilage inférieur (6') du plus petit opercule. La figure 3 montre après l'opération d'arrachage, l'étanchéité avec le tuyau de vidange (15).

### EXEMPLE DE REALISATION

Pour concilier les deux fonctions d'operculage et d'étanchéité en respectant trois diamètres par orifice (diamètre 50 - 40 - 32), il a été réalisé sur la partie avant d'un tampon de réduction en élastomère, côté introduction des tuyaux de vidange, un toilage particulier des orifices et, sur la partie arrière dudit tampon, des lèvres d'étanchéité.

Sur la partie avant, un premier toilage du type rondelle comporte vers le centre de l'opercule une première languette de préhension qui, après arrachement vers l'extérieur, libère un petit passage correspondant à l'introduction possible dans cet orifice de deux diamètres de tuyaux de vidange diamètre 40 et 32, avec étanchéification requise par les normes d'utilisation.

Un deuxième toilage du type rondelle comporte vers la périphérie de l'opercule une deuxième languette de préhension qui, après arrachement, libère un grand passage correspondant à une canalisation de diamètre 50 ou de 40. L'étanchéification de ce passage est assurée, sur la partie arrière du tampon de réduction, par une lèvre capable d'accepter ces diamètres.

Dans le présent exemple et pour chaque orifice operculable, on dispose d'un choix de deux languettes de préhension permettant au tampon élastomère d'accueillir trois tuyaux de vidange différents et avec toute garantie d'étanchéité et sans contrainte particulière pour l'installateur lors de la découpe de l'opercule.

Sur le plan économique, une seule référence de tampon operculable permet d'assurer 18 possibilités pour trois orifice et trois diamètres de tuyaux de vidange.

Bien entendu, l'invention n'est nullement limitée aux modes d'exécution représentés et décrits, qui n'ont été donnés qu'à titre d'exemples.

C'est ainsi qu'il ne sera pas fait novation à l'invention en augmentant le nombre des orifices sur le tampon de réduction, en changeant les possibilités de diamètres par orifice, en remplaçant la forme en rondelle du toilage par une forme en languette circonscrite à l'opercule, en remplaçant les saillies de préhension à la pince par le bombement ou un renflement des opercules centraux par exemple qui ne se trouveraient plus ainsi dans un plan parallèle au tampon, et en prévoyant un tampon de réduction faisant appel à l'assemblage de plusieurs pièces.

## Revendications

**1 -** Dispositif de branchement sélectif, pour au moins un tuyau de vidange de petit diamètre, sur une canalisation ou un raccord d'évacuation sanitaire et comprenant un tampon de réduction en caoutchouc ou élastomère muni d'au moins une série d'orifices operculables destinés à l'introduction de plusieurs diamètres différents de tuyaux par séries d'orifice, caractérisé en ce que le tampon de réduction (1) qui est logé dans l'orifice de branchement (3) de la canalisation ou du raccord d'évacuation sanitaire, comprend sur sa face avant (côté extérieur) et au niveau de chaque série d'orifices operculables (6-7-8), au moins un toilage particulier (6'-6'') (7'-7'') (8'-8'') délimitant au moins une rondelle munie de dispositif de préhension (10-10') faisant saillie vers l'extérieur dudit toilage, et susceptible d'être arrachée pour dégager l'orifice de branchement sélectionné.

**2 -**Dispositif selon la revendication 1, caractérisé en ce que chaque toilage (6'-6'') (7'-7'')(8'-8'') est délimité par un rainurage sur les faces arrières et/ou avant de l'opercule (11-11').

**3 -** Dispositif selon l'une quelconque des revendications précédentes, caractérisé en ce que le tampon de réduction (1) comprend sur sa face avant (côté extérieur) et au niveau de chaque série d'orifices operculables (6-7-8), deux toilages indépendants (6'-6'') dotés chacun de dispositif de préhension (10-10'), lesdits toilages étant disposés dans des plans différents (A - A et A' - A') mais parallèles au plan horizontal (A'' - A'') représenté par la face avant du tampon de réduction.

**4 -** Dispositif selon la revendication 3, caractérisé en ce que le toilage (6'') du plus grand opercule est compris dans un plan (A - A) disposé au dessus du plan horizontal (A''-A'') du tampon de réduction, tandis que le toilage (6') du plus petit opercule est compris dans un plan (A' - A') disposé au dessous du plan horizontal (A'' - A'') dudit tampon.

**5 -** Dispositif selon la revendication 4, caractérisé en ce que chaque dispositif de préhension (10-10') est dimensionné et positionné pour permettre l'extraction de l'opercule souhaité par rupture franche.

**6 -** Dispositif selon l'une quelconque des revendications précédentes, caractérisé en ce que la partie tronconique du toilage (14') sert de lèvre d'étanchéité lorsque l'orifice (6') est operculé et la canalisation (15') en place.

**7 -** Dispositif selon l'une quelconque des revendications précédentes, caractérisé en ce que le tampon de réduction (1) comprend sur sa face arrière (côté intérieur) au moins une membrane d'étanchéité (14) à configuration tronconique en forme de lèvres, et qui s'étend sous le plan horizontal (A''-A'') du tampon et au delà du plan (A'-A') du toilage inférieur.

**8 -** Dispositif selon l'une quelconque des revendications précédentes, caractérisé en ce qu'au moins un toilage particulier (6' - 6'') (7' - 7'') (8' - 8'') délimite au moins une languette circonscrite à l'opercule.

**9 -** Dispositif selon l'une quelconque des revendications précédentes, caractérisé en ce que le dispositif de préhension (10-10') faisant saillie vers l'extérieur d'un toilage (6'-6'') (7' -7'') (8'-8'') est obtenu par apport de matière.

**10 -** Dispositif selon l'une quelconque des revendications précédentes, caractérisé en ce que le dispositif de préhension (10 - 10') faisant saillie vers l'extérieur d'un toilage (6'-6'') (7'-7'')(8'-8'') est obtenu par le bombement ou le renflement des opercules centraux (6-7-8).
